# EUROPÄISCHE PATENTSCHRIFT

(11) **EP 3 803 303 B1**
(45) Veröffentlichungstag und Bekanntmachung des Hinweises auf die Patenterteilung: **03.07.2024**
(21) Anmeldenummer: 19726998.8
(22) Anmeldetag: 27.05.2019
(51) Int. Cl.: G01K 15/00

(54) **VORRICHTUNG ZUR AUTOMATISCHEN, RÜCKFÜHRBAREN KALIBRIERUNG VON THERMOMETERN ZUR UMGEBUNGSTEMPERATURMESSUNG**
DEVICE FOR THE AUTOMATIC, RETRACTIVE CALIBRATION OF THERMOMETERS FOR AMBIENT TEMPERATURE MEASUREMENT
ARRANGEMENT D'ÉTALONNAGE AUTOMATIQUE TRAÇABLE DE THERMOMÈTRES SERVANT MESURER LA TEMPÉRATURE AMBIANTE

(30) Priorität: 01.06.2018 DE 102018113090
(43) Veröffentlichungstag der Anmeldung: 14.04.2021
(73) Patentinhaber: Technische Universität Ilmenau, 98683 Ilmenau (DE)
(72) Erfinder: AUGUSTIN, Silke, 98693 Ilmenau (DE); FRÖHLICH, Thomas, 98693 Ilmenau (DE); MAMMEN, Helge, 98693 Ilmenau (DE); MARIN-TORO, Juan Sebastian, 98693 Ilmenau (DE)
(74) Vertreter: Kailuweit & Uhlemann Patentanwälte Partnerschaft mbB
(86) Internationale Anmeldenummer: PCT/EP2019/063660
(87) Internationale Veröffentlichungsnummer: WO 2019/228986

(56) Entgegenhaltungen:
- GB-A- 2 215 839
- JP-A- 2003 227 763
- US-A1- 2005 053 114

## Beschreibung

Die Erfindung betrifft eine Vorrichtung und ein Verfahren zur automatisierten Kalibrierung von Thermometern zur Umgebungstemperaturmessung.

Die Kalibrierung von Thermometern wird üblicherweise in Kalibrierbädern, gefüllt mit Flüssigkeiten, Salzen oder Pulvern, in Kalibrieröfen oder mit Hilfe von Fixpunktzellen durchgeführt. Dazu werden die Thermometer entweder ausgebaut und in einem Labor kalibriert oder die Kalibrierung erfolgt direkt vor Ort. Beide Methoden stellen insbesondere im Bereich der Wetterbeobachtung einen großen Aufwand dar. Auch bei Klimakammern bzw. in Lagerräumen ist in den meisten Fällen eine Vor-Ort-Kalibrierung unumgänglich.

Bekannte Thermometer, die ohne Ausbau aus ihrer Messstelle kalibriert werden, sind sogenannte Fixpunktthermometer, die Fixpunktzellen nutzen. Fixpunktzellen enthalten ein Fixpunktmaterial, welches einen temperaturabhängigen Phasenübergang bei einer sehr genau bekannten Temperatur aufweist. Temperaturabhängige Phasenübergänge können den Aggregatzustand des Fixpunktmaterial betreffen oder den Wechsel materialspezifischer Eigenschaften, wie beispielsweise den Übergang vom ferroelektrischen in den paraelektrischen Zustand oder den Wechsel von ferromagnetischen zu paramagnetischen Verhalten oder der Wechsel der Kristallstruktur. Die sehr genau bekannte Temperatur des Phasenübergangs wird zur Überprüfung oder Kalibrierung des Thermometers genutzt.

Fixpunktthermometer besitzen erhebliche technische Nachteile hinsichtlich einer sehr langsamen und trägen Messgeschwindigkeit, deutlich größerer Sensorabmessungen und höherer Eigenerwärmung bei Widerstandsthermometern. Weiterhin ist die notwendige Sensorelektronik deutlich komplizierter und aufwändig.

Aus dem Stand der Technik sind sogenannte Miniatur-Fixpunktzellen, beispielsweise aus DE 195 32 077 A1, DE 199 41 731 A1 und GB 2 155 238 A, bekannt.

DE 195 32 077 A1 offenbart eine miniaturisierte Fixpunktzelle aus Keramik zur in-situ Kalibration von Temperatursensoren. Die Bauform ermöglicht eine verbesserte thermische Kopplung von Sensor und Referenzsubstanz.

DE 199 41 731 A1 offenbart eine Miniatur-Fixpunktzelle zur automatisierten Mehrpunkt-in-situ-Kalibration von Temperatursensoren. Die Miniatur-Fixpunktzelle weist zusätzliche Heiz- und Kühlelemente auf, um Phasenumwandlungsprozesse zu induzieren.

GB 2 155 238 A offenbart ein Temperaturmessgerät umfassend einen Temperatursensor, der innerhalb eines keramischen Isolators angeordnet ist, ein keramisches Gehäuse, welches den keramischen Isolator und eine Miniaturschmelzpunkt- oder Miniaturgefrierpunktzelle enthält. Der Temperatursensor reicht in die Miniaturschmelzpunkt- oder Miniaturgefrierpunktzelle hinein und diese enthält eine Menge eines Material mit bekannten Schmelz- oder Gefrierpunkt. Das Temperaturmessgerät kann somit kalibriert werden, ohne es von seiner Position zur Temperaturmessung zu entfernen.

Derartige Miniatur-Fixpunktzellen nutzen die gleichen Materialien und Techniken wie große Fixpunktzellen, die üblicherweise zur Kalibrierung von ausgebauten Thermometern genutzt werden. Vorteil der Miniatur-Fixpunktzellen sind ihre kompakte Bauform und die dadurch mögliche Integration in das Thermometer. Ein weiterer Nachteil der kleinen und integrierbaren Fixpunktzellen ist die geringere Temperaturstabilität im Vergleich zu großen Fixpunktzellen, so dass kleine Fixpunktzellen eine geringe Präzision aufweisen.

Eine Vorrichtung, die Materialien zur Kalibrierung nutzt, die einen Wechsel ihrer elektrischen oder magnetischen Eigenschaften aufweisen, ist aus DE 10 2015 112 425 A1 bekannt.

DE 10 2015 112 425 A1 offenbart eine Vorrichtung und ein Verfahren zur Bestimmung und/oder Überwachung der Temperatur eines Mediums umfassend zumindest einen Temperatursensor und zumindest zwei Referenzelemente zur in-situ Kalibrierung und/oder Validierung des Temperatursensors. Die zumindest zwei Referenzelemente bestehen dabei aus zumindest teilweise ferroelektrischen oder ferromagnetischen Materialien.

DE 196 81 502 T1 offenbart eine Vorrichtung und ein Verfahren zur in-situ Kalibrierung eines Temperatursensors innerhalb einer Vorrichtung zur Behandlung von Substraten. Dabei weist die Kalibriereinrichtung mindestens einen in-situ Kalibrierfühler auf, welcher mit einem Stellglied verbunden ist. Während eines Kalibrierzyklus wird der temperaturempfindliche in-situ-Fühler derart dem Substrat angenähert, dass auch im Falle einer Berührung von Substrat und Fühler die Unversehrtheit der Ausrüstung zur thermischen Behandlung erhalten bleibt. Nach Erreichen der Endposition wird die Substrattemperatur zwischen einer ersten und einer zweiten Temperatur mit einer niedrigen Rate geändert. Während der Änderung werden die Daten des Temperatursensors und die Daten des Fühlers mittels einer Datenverarbeitungsanlage gespeichert und ausgewertet. Ergebnis dieser Auswertung sind die Kalibrierparameter des verwendeten Substrattemperatursensors. Nach Beendigung des Kalibrierzyklus wird der in-situ Fühler wieder zurückgezogen.

Nachteilig bei allen Temperatursensoren mit eingebauter Kalibriereinrichtung ist eine deutliche Verschlechterung der dynamischen Eigenschaften des Temperatursensors bedingt durch die Masse der eingebauten Kalibriereinrichtung. Weiterhin nachteilig ist, dass im Temperaturbereich der Phasenumwandlungstemperatur(en) die Umgebungstemperatur durch den Temperatursensor nicht gemessen werden kann.

Gerade in Anwendungsgebieten, wo schnelle und präzise Messungen der Temperatur gefordert werden, haben Thermometer mit integrierter Fixpunktzelle den Nachteil einer verringerten Messgeschwindigkeit bzw. Ansprechzeit auf Temperaturänderungen. Derartige Anwendungsfälle liegen beispielsweise in Präzisionsklimalaboren vor. Ein weiterer Anwendungsfall sind meteorologische Wetterstationen, die teilweise sehr lange unbeaufsichtigt sind oder in schwer zugänglichen Gebieten stehen. Aber auch unbemannte, autonome Fahrzeuge oder Flugkörper benötigen eine schnelle und präzise Temperaturmessung.

Aufgabe der Erfindung ist es daher eine Vorrichtung und ein Verfahren anzugeben, um die automatisierte Kalibrierung eines Thermometers vor Ort zu ermöglichen, ohne dass das Thermometer aus seiner Messstelle ausgebaut werden muss und die Nachteile bisheriger Lösungen zur Vor-Ort-Kalibrierung von Thermometern, wie eine Verschlechterung der dynamischen Eigenschaften überwunden werden.

Die Aufgabe wird gelöst durch eine Vorrichtung und ein Verfahren mit den Merkmalen der unabhängigen Ansprüche. Vorteilhafte Ausgestaltungen der Erfindung sind Gegenstand der abhängigen Ansprüche.

Erfindungsgemäß wird eine Vorrichtung gemäß Anspruch 1 bereitgestellt.

Vorteilhaft ermöglicht eine derartige Vorrichtung die Vor-Ort-Kalibrierung des mindestens einen Temperatursensors, ohne dass dieser aus seiner Messstelle ausgebaut werden muss. Die Positioniereinrichtung ist derart ausgebildet, den für die Kalibrierung thermischen Kontakt zwischen dem mindestens einen Temperatursensor und der mindestens einen Fixpunktzelle temporär herzustellen, indem der mindestens einen Temperatursensor und die Kalibriereinrichtung entlang der mindestens einen vertikalen Achse der Vorrichtung aufeinander zu- und wegbewegt werden. Die Masse der Kalibriereinrichtung, die mindestens eine Fixpunktzelle umfasst, ist somit temporär, d.h. im Kalibriermodus, in thermischen Kontakt mit dem mindestens einen Temperatursensor. Dadurch wird im Gegensatz zu den aus dem Stand der Technik bekannten Thermometern mit integrierter Fixpunktzelle die Messdynamik des mindestens einen Temperatursensors im Messmodus nur minimal beeinflusst. Unter Messmodus wird der Zustand verstanden, wenn der mindestens eine Temperatursensor in thermischen Kontakt mit der Umgebungstemperatur steht, um die Umgebungstemperatur zu messen. Unter Kalibriermodus wird der Zustand verstanden, wenn der mindestens eine Temperatursensor in thermischen Kontakt mit der mindestens einen Fixpunktzelle steht, um den mindestens einen Temperatursensor zu kalibrieren. Weiterhin vorteilhaft ermöglicht eine derartige Vorrichtung, bei der die mindestens eine Fixpunktzelle und der mindestens eine Temperatursensor nur temporär in thermischen Kontakt stehen, die Verwendung von großen Fixpunktzellen, die eine bessere Genauigkeit als integrierte Miniatur-Fixpunktzellen ermöglichen.

Ein Temperatursensor im Sinne der Erfindung ist ein elektrisches oder elektronisches Bauelement, welches ein elektrisches Signal als Maß für die gemessene Umgebungstemperatur liefert. Derartige Bauelemente sind beispielsweise Platin- oder Halbleiter-Messwiderstände, die als elektrisches Signal als Maß für die Temperatur die Widerstandsänderung nutzen. Weitere bekannte Bauelemente sind beispielsweise Pyrometer, Thermoelemente oder faseroptische Temperatursensoren.

Eine Positioniereinrichtung im Sinne der Erfindung ist eine Einrichtung, die derart ausgebildet ist, die Kalibriereinrichtung und den Temperatursensor entlang mindestens einer vertikalen Achse der Vorrichtung zu bewegen. Erfindungsgemäß wird eine derartige Bewegung beispielsweise durch Linearantriebe oder, optional, Drehbewegungen realisiert.

Eine Kalibriereinrichtung im Sinne der Erfindung ist eine Einrichtung, die mindestens eine Fixpunktzelle umfasst. Bekannt sind die unterschiedlichsten Bauformen für Fixpunktzellen. Die Kalibriereinrichtung kann auch mehrere Fixpunktzellen umfassen. Mehrere Fixpunktzellen ermöglichen die Kalibrierung des mindestens einen Temperatursensors an mehreren Fixpunkten.

Dem Fachmann sind Verfahren zur thermischen Steuerung und zur Auswertung der gemessenen Temperatursignalverläufe bekannt.

Die Steuereinrichtung dient der Steuerung der Positioniereinrichtung. Vorteilhaft ermöglicht die Steuerungseinrichtung, dass in festgelegten Intervallen der thermische Kontakt zwischen dem mindestens einen Temperatursensor und der mindestens einen Fixpunktzelle automatisiert hergestellt wird, um den mindestens einen Temperatursensor zu kalibrieren.

Weiterhin vorteilhaft ermöglicht die Steuereinrichtung die automatisierte Durchführung bedarfsgerechter Kalibrierintervalle, beispielsweise in festgelegten Zeitabständen oder nach detektierten Ereignissen, wie beispielsweise schnellen Temperaturwechseln.

Die Auswerte- und Speichereinheit dient der Aufzeichnung und Auswertung der erfassten Messdaten. Vorteilhaft ermöglicht die Auswerte- und Speichereinheit die Weiterverarbeitung und Speicherung der ermittelten Kalibrier- und Messwerte.

In einer weiteren bevorzugten Ausführungsform ist die Positioniereinrichtung derart ausgebildet, nur die Kalibriereinrichtung entlang mindestens einer vertikalen Achse der Vorrichtung zu bewegen.

Vorteilhaft ermöglicht eine derartige Vorrichtung, dass der mindestens eine Temperatursensor nicht bewegt wird, um den zur Kalibrierung nötigen thermischen Kontakt zwischen dem mindestens einen Temperatursensor und der mindestens einen Fixpunktzelle herzustellen. Dadurch können einerseits nachteilige Auswirkungen auf das Kalibrierergebnis durch die Erschütterungsempfindlichkeit des mindestens einen Temperatursensors vermieden werden. Andererseits bleibt der mindestens eine Temperatursensor immer exakt am Ort der Temperaturmessung, so dass auftretende örtliche Temperaturgradienten keinen Einfluss auf die Messung haben.

In einer weiteren bevorzugten Ausführungsform ist die Positioniereinrichtung derart ausgebildet, die Kalibriereinrichtung zusätzlich entlang einer ersten horizontalen Achse der Vorrichtung zu bewegen und/oder um eine erste vertikale Achse der Vorrichtung zu rotieren.

Vorteilhaft ermöglicht eine derartige Vorrichtung die Positionierung der Kalibriereinrichtung, so dass der mindestens eine Temperatursensor und die mindestens eine Fixpunktzelle auf einer vertikalen Achse der Vorrichtung angeordnet sind. Dadurch kann zur Kalibrierung des mindestens einen Temperatursensors durch der thermische Kontakt zwischen dem mindestens einen Temperatursensor und der Fixpunktzelle durch das Bewegen von Kalibriereinrichtung und Temperatursensor entlang einer vertikalen Achse der Vorrichtung hergestellt werden.

Dem Fachmann ist bekannt, dass derartige translatorische und/oder rotatorische Bewegungen durch Linearantriebe oder rotorische Antriebe realisiert werden können.

In einer weiteren bevorzugten Ausführungsform ist auf jeder der mindestens einen vertikalen Achsen der Vorrichtung mindestens ein Temperatursensor angeordnet und die vertikalen Achsen der Vorrichtung sind parallel zueinander.

Vorteilhaft ermöglicht eine derartige Vorrichtung, dass mehrere Temperatursensoren nebeneinander auf parallelen vertikalen Achsen oder mehrere Temperatursensoren auf einer vertikalen Achse übereinander angeordnet sind.

Weiterhin vorteilhaft ermöglicht eine derartige Vorrichtung, dass mehrere Temperatursensoren in räumlicher Nähe zueinander angeordnet sind und die Umgebungstemperatur erfassen. Dem Fachmann sind entsprechende Verfahren bekannt, um aus den von mehreren Temperatursensoren erfassten Temperaturwerten den Mittelwert zu bestimmen.

In einer weiteren bevorzugten Ausführungsform ist die Kalibriereinrichtung derart ausgebildet, dass die mindestens eine Fixpunktzelle radial beabstandet von der ersten vertikalen Achse angeordnet ist.

Vorteilhaft ermöglicht einen derartige Vorrichtung, dass die mindestens eine Fixpunktzelle während der Positionierung der Kalibriereinrichtung um die erste vertikale Achse rotieren kann, bis der mindestens eine Temperatursensor und die mindestens eine Fixpunktzelle auf einer vertikalen Achse der Vorrichtung angeordnet sind.

In einer Ausführungsform weist die Kalibriereinrichtung eine kreisförmige Halterung auf, die auf der ersten vertikalen Achse der Vorrichtung angeordnet ist. Die kreisförmige Halterung kann beispielsweise ein Drehteller sein, auf dem die mindestens eine Fixpunktzelle radial beabstandet von der ersten vertikalen Achse der Vorrichtung angeordnet ist.

In einer bevorzugten Ausführungsform weist die Vorrichtung zur automatisierten Kalibrierung von Thermometern weiterhin einen ersten und einen zweiten Temperatursensor auf. Der erste und der zweite Temperatursensor sind entlang einer vertikalen Achse der Vorrichtung übereinander oder entlang einer zweiten horizontalen Achse der Vorrichtung nebeneinander angeordnet. Vorteilhaft ermöglicht eine derartige Vorrichtung, dass während der Kalibrierung des ersten Temperatursensors der zweite Temperatursensor weiterhin die Umgebungstemperatur misst.

Dadurch wird vorteilhaft die kontinuierliche Messung der Umgebungstemperatur mittels des zweiten Temperatursensors während der Kalibrierung des ersten Temperatursensors ermöglicht. Während der Kalibrierung des zweiten Temperatursensors misst der erste Temperatursensor die Umgebungstemperatur.

In einer weiteren Ausführungsform sind der erste Temperatursensor und der zweite Temperatursensor über die Steuer- und Auswerteeinheit miteinander gekoppelt.

Vorteilhaft ermöglicht die Kopplung des ersten und des zweiten Temperatursensors, dass der zweite Temperatursensor anhand der kalibrierten Kennlinie des ersten Temperatursensors geprüft werden kann.

Die Kopplung erfolgt durch dem Fachmann bekannte Auswerteverfahren, die in der Auswerte- und Speichereinheit hinterlegt sind. Beispielsweise ist die zu messende Umgebungstemperatur gleich der durch den ersten Temperatursensor gemessenen Umgebungstemperatur während der Kalibrierung des zweiten Temperatursensors. Während der Kalibrierung des ersten Temperatursensors ist die zu messende Umgebungstemperatur gleich der durch den zweiten Temperatursensor gemessenen Umgebungstemperatur. Wenn der erste und der zweite Temperatursensor die Umgebungstemperatur messen, ist die zu messende Umgebungstemperatur beispielsweise der Mittelwert aus den gemessenen Umgebungstemperaturen des ersten und des zweiten Temperatursensors. Dem Fachmann sind weitere Verfahren zur Mittelwertbildung bekannt.

In einer weiteren Ausführungsform umfasst die Kalibriereinrichtung zwei Fixpunktzellen. Bevorzugt unterscheiden sich die Fixpunkttemperaturen der zwei Fixpunktzellen voneinander. Vorteilhaft ermöglichen die zwei Fixpunktzellen die Kalibrierung des mindestens einen Temperatursensors an zwei Fixpunkttemperaturen. Dadurch wird die Genauigkeit der Kalibrierung erhöht.

In einer weiteren Ausführungsform umfasst die Kalibriereinrichtung mehr als zwei Fixpunktzellen. Bevorzugt unterscheiden sich die Fixpunkttemperaturen der mehr als zwei Fixpunktzellen. Vorteilhaft wird dadurch die Kalibriergenauigkeit weiter erhöht.

In einer bevorzugten Ausführungsform wird die erfindungsgemäße Vorrichtung verwendet zur automatisierten Kalibrierung von Thermometern. Diese umfasst die bedarfsgerechte Festlegung von Kalibrierzyklen (z.B. festgelegte Zeitabstände, Kalibrierung nach detektierten Ereignissen, schnellen Temperaturwechselgeschwindigkeiten).

Vorteilhaft ermöglicht eine derartige Vorrichtung die Einsparung von Kosten gegenüber bekannten Verfahren zur Kalibrierung von Thermometern.

Weiterhin vorteilhaft ermöglicht eine derartige Vorrichtung, dass die Kalibrierung ohne geschultes Personal ausgeführt wird. Durch die integrierte Auswerte- und Speichereinheit erfolgt zudem automatisiert die Speicherung und Weiterverarbeitung der Mess- und Kalibrierdaten.

Weiterhin zur Erfindung gehört ein Verfahren zur automatisierten Kalibrierung von Thermometern gemäß dem Anspruch 7.

Ist ein thermischer Kontakt zwischen dem mindestens einen Temperatursensor und der mindestens einen Fixpunktzelle hergestellt, befindet sich der mindestens eine Temperatursensor im Kalibriermodus.

Besteht ein thermischer Kontakt zwischen dem mindestens einem Temperatursensor und der Umgebungstemperatur befindet sich der mindestens eine Temperatursensor im Messmodus.

Vorteilhaft ermöglicht ein derartiges Verfahren, dass die mindestens eine Fixpunktzelle nur temporär im thermischen Kontakt mit dem mindesten einen zu kalibrierenden Temperatursensor steht, so dass Nachteile bezüglich der Messdynamik des mindestens einen Temperatursensors überwunden werden und eine hohe Messgeschwindigkeit gewährleistet wird.

Weiterhin vorteilhaft ermöglich ein derartiges Verfahren die Einsparung von Kosten, da die Temperatursensoren nicht aus der Messstelle ausgebaut werden müssen. Weiterhin erfordert das erfindungsgemäße Verfahren kein geschultes Personal, welches die Kalibrierung vornimmt, vielmehr erfolgt die Kalibrierung und die Verarbeitung der Kalibrier- und Messwerte automatisiert.

Weiterhin vorteilhaft ermöglicht ein derartiges Verfahren, bedingt durch den nur temporären Kontakt zwischen dem mindestens einen Temperatursensor und der mindestens einen Fixpunktzelle, die Verwendung von großformatigen Fixpunktzellen innerhalb der Kalibriereinrichtung. Großformatige Fixpunktzellen bieten gegenüber kleineren integrierbaren Fixpunktzellen den Vorteile einer besseren Genauigkeit der Kalibrierung.

In einer bevorzugten Ausführungsform des Verfahrens zur automatisierten Kalibrierung von Thermometern wird vor Schritt a) in einem Schritt c) die Kalibriereinrichtung positioniert. Die Kalibriereinrichtung wird in Schritt c) derart positioniert, dass der mindestens eine Temperatursensor und die mindestens eine Fixpunktzelle auf einer vertikalen Achse der Vorrichtung angeordnet sind.

Vorteilhaft ermöglicht der Schritt a) vorangehende Schritt c); dass die Kalibriereinrichtung auf einer vertikalen Achse mit dem jeweils zu kalibrierenden mindestens einen Temperatursensor angeordnet wird.

In einer bevorzugten Ausführungsform wird in Schritt c)die Kalibriereinrichtung positioniert, indem die Positioniereinrichtung die Kalibriereinrichtung translatorisch entlang einer horizontalen Achse der Vorrichtung und/oder rotatorisch um die mindestens eine vertikale Achse der Vorrichtung bewegt.

Vorteilhaft ermöglicht das Verfahren, dass mehrere Temperatursensoren, die auf mehreren parallelen vertikalen Achsen der Vorrichtung entlang einer horizontalen Achse der Vorrichtung angeordnet sind, nacheinander durch Positionierung der Kalibriereinrichtung kalibriert werden können.

Weiterhin vorteilhaft ermöglicht das Verfahren, dass mehrere Fixpunktzellen, die die Kalibriereinrichtung umfasst, zur Kalibrierung des mindestens einen Temperatursensor genutzt werden können. Dadurch wird die Genauigkeit der Kalibrierung erhöht.

In einer bevorzugten Ausführungsform des Verfahrens zur automatisierten Kalibrierung von Thermometern unter Verwendung einer Vorrichtung, weiterhin aufweisend einen ersten und einen zweiten Temperatursensor. Der erste und der zweite Temperatursensor sind entlang einer vertikalen Achse der Vorrichtung übereinander oder entlang einer horizontalen Achse der Vorrichtung auf zwei parallelen vertikalen Achsen nebeneinander angeordnet. In Schritt a) wird der thermische Kontakt zwischen dem ersten Temperatursensor und der mindestens einen Fixpunktzelle hergestellt, um den ersten Temperatursensor zu kalibrieren. Gleichzeitig steht der zweite Temperatursensor in thermischen Kontakt mit der zu messenden Umgebungstemperatur, um die Umgebungstemperatur zu messen. Der erste Temperatursensor befindet sich im Kalibriermodus, während der zweite Temperatursensor sich im Messmodus befindet.

Vorteilhaft ermöglicht ein derartiges Verfahren, dass die Umgebungstemperatur mittels des zweiten Temperatursensors kontinuierlich auch während der Kalibrierung des ersten Temperatursensors erfasst wird.

Bevorzugt sind der erste und der zweite Temperatursensor über die Auswerte- und Speichereinheit miteinander gekoppelt, so dass die Mittelwertbildung aus den gemessenen Temperaturwerten nach bekannten Verfahren bestimmt wird.

Vorteilhaft kann somit der zweite Temperatursensor anhand der kalibrierten Kennlinie des ersten Temperatursensors oder der erste Temperatursensor anhand der kalibrierten Kennlinie des zweiten Temperatursensors überprüft werden.

In einer bevorzugten Ausführungsform des Verfahrens zur automatisierten Kalibrierung von Thermometern werden nach Schritt b) die Schritte c), a) und b) wiederholt. In Schritt c) wird die Kalibriereinrichtung positioniert, so dass der zweite Temperatursensor und die mindestens eine Fixpunktzelle auf einer vertikalen Achse der Vorrichtung angeordnet sind. Nachfolgend wird in Schritt a) ein thermischer Kontakt zwischen dem zweiten Temperatursensor und der mindestens einen Fixpunktzelle hergestellt, um den zweiten Temperatursensor zu kalibrieren. Anschließend wird in Schritt b) der thermische Kontakt zwischen dem zweiten Temperatursensor und der mindestens einen Fixpunktzelle entfernt, so dass der zweite Temperaturmodus in thermischen Kontakt mit der zu messenden Umgebungstemperatur steht.

Vorteilhaft ermöglicht ein derartiges Verfahren, dass nach der Kalibrierung des ersten Temperatursensors auch der zweite Temperatursensor kalibriert wird. Damit sinkt die Unsicherheit der Temperaturmessung.

Weiterhin vorteilhaft ermöglicht ein derartiges Verfahren, dass immer zwei kalibrierte Temperatursensoren zur Messung der Umgebungstemperatur zur Verfügung stehen.

In einer weiteren Ausführungsform des Verfahrens zur automatisierten Kalibrierung von Thermometern können die Wiederholungen der Schritte c), a), b) in beliebiger Reihenfolge wiederholt werden. So kann beispielweise beim erstmaligen Durchführen von Schritt c) die Kalibriereinrichtung derart positioniert werden, dass der zweite Temperatursensor und die mindestens eine Fixpunktzelle aus einer vertikalen Achse der Vorrichtung angeordnet sind.

In einer bevorzugten Ausführungsform des Verfahrens zur automatisierten Kalibrierung von Thermometern unter Verwendung einer Vorrichtung, weiterhin aufweisend eine erste und eine zweite Fixpunktzelle. Die Schritte c), a), b) werden viermal wiederholt, um den ersten Temperatursensor zu positionieren und nacheinander mittels der ersten und der zweiten Fixpunktzelle zu kalibrieren und anschließend den zweiten Temperatursensor zu positionieren und nacheinander mittels der ersten und zweiten Fixpunktzelle zu kalibrieren.

Bevorzugt unterscheiden sich die erste und die zweite Fixpunktzelle voneinander, so dass die erste und die zweite Fixpunktzelle unterschiedliche Fixpunkttemperaturen aufweisen.

Beim erstmaligen Durchführen der Schritte c), a), b) wird in Schritt c) die Kalibriereinrichtung positioniert, so dass der erste Temperatursensor und die erste Fixpunktzelle auf einer vertikalen Achse der Vorrichtung angeordnet sind. Anschließend wird in Schritt a) der thermische Kontakt zwischen dem ersten Temperatursensor und der ersten Fixpunktzelle hergestellt und der erste Temperatursensor mittels der ersten Fixpunktzelle kalibriert. Gleichzeitig besteht der thermische Kontakt zwischen dem zweiten Temperatursensor und der Umgebungstemperatur, so dass der zweite Temperatursensor im Messmodus ist. In Schritt b) wird anschließend der thermische Kontakt zwischen dem ersten Temperatursensor und der ersten Fixpunktzelle entfernt, so dass der erste Temperatursensor in thermischen Kontakt mit der Umgebungstemperatur steht. Gleichzeitig steht der zweite Temperatursensor ebenfalls in thermischen Kontakt mit der Umgebungstemperatur.

Beim zweitmaligen Durchführen der Schritte c), a), b) wird in Schritt c) die Kalibriereinrichtung positioniert, so dass der erste Temperatursensor und die zweite Fixpunktzelle auf einer vertikalen Achse der Vorrichtung angeordnet sind. Anschließend wird in Schritt a) der thermische Kontakt zwischen dem ersten Temperatursensor und der zweiten Fixpunktzelle hergestellt und der erste Temperatursensor mittels der zweiten Fixpunktzelle kalibriert. Gleichzeitig besteht der thermische Kontakt zwischen dem zweiten Temperatursensor und der Umgebungstemperatur, so dass der zweite Temperatursensor im Messmodus ist. In Schritt b) wird anschließend der thermische Kontakt zwischen dem ersten Temperatursensor und der zweiten Fixpunktzelle entfernt, so dass der erste Temperatursensor in thermischen Kontakt mit der Umgebungstemperatur steht. Gleichzeitig steht der zweite Temperatursensor ebenfalls in thermischen Kontakt mit der Umgebungstemperatur.

Beim drittmaligen Durchführen der Schritte c), a), b) wird in Schritt c) die Kalibriereinrichtung positioniert, so dass der zweite Temperatursensor und die erste Fixpunktzelle auf einer vertikalen Achse der Vorrichtung angeordnet sind. Anschließend wird in Schritt a) der thermische Kontakt zwischen dem zweiten Temperatursensor und der ersten Fixpunktzelle hergestellt und der zweite Temperatursensor mittels der ersten Fixpunktzelle kalibriert. Gleichzeitig besteht der thermische Kontakt zwischen dem ersten Temperatursensor und der Umgebungstemperatur, so dass der erste Temperatursensor im Messmodus ist. In Schritt b) wird anschließend der thermische Kontakt zwischen dem zweiten Temperatursensor und der ersten Fixpunktzelle entfernt, so dass der zweite Temperatursensor in thermischen Kontakt mit der Umgebungstemperatur steht. Gleichzeitig steht der erste Temperatursensor ebenfalls in thermischen Kontakt mit der Umgebungstemperatur.

Beim viertmaligen Durchführen der Schritte c), a), b) wird in Schritt c) die Kalibriereinrichtung positioniert, so dass der zweite Temperatursensor und die zweite Fixpunktzelle auf einer vertikalen Achse der Vorrichtung angeordnet sind. Anschließend wird in Schritt a) der thermische Kontakt zwischen dem zweiten Temperatursensor und der zweiten Fixpunktzelle hergestellt und der zweite Temperatursensor mittels der zweiten Fixpunktzelle kalibriert. Gleichzeitig besteht der thermische Kontakt zwischen dem ersten Temperatursensor und der Umgebungstemperatur, so dass der erste Temperatursensor im Messmodus ist. In Schritt b) wird anschließend der thermische Kontakt zwischen dem zweiten Temperatursensor und der zweiten Fixpunktzelle entfernt, so dass der zweite Temperatursensor in thermischen Kontakt mit der Umgebungstemperatur steht. Gleichzeitig steht der erste Temperatursensor ebenfalls in thermischen Kontakt mit der Umgebungstemperatur.

Vorteilhaft ermöglicht ein derartiges Verfahren, dass der erste und der zweite Temperatursensor mittels der ersten und der zweiten Fixpunktzelle kalibriert werden.

In einer Ausführungsform des Verfahrens weist die Kalibriereinrichtung mehr als zwei Fixpunktzellen auf. Die Schritte c), a), b) werden dann in entsprechender Anzahl wiederholt. Damit kann vorteilhaft die Kalibriergenauigkeit weiter erhöht werden.

In einer bevorzugten Ausführungsform des Verfahrens ist die Positioniereinrichtung derart ausgebildet, nur die Kalibriereinrichtung entlang mindestens einer vertikalen Achse der Vorrichtung zu bewegen.

Vorteilhaft ermöglicht ein derartiges Verfahren, dass der mindestens eine Temperatursensor nicht bewegt wird. Dadurch werden nachteilige Auswirkungen auf das Kalibrierergebnis durch die Erschütterungsempfindlichkeit des mindestens einen Temperatursensors vermieden. Weiterhin vorteilhaft bleibt der mindestens eine Temperatursensor immer exakt am Ort der Temperaturmessung, so dass auftretende örtliche Temperaturgradienten keinen Einfluss auf die Messung haben.

In einer bevorzugten Ausführungsform wird das Verfahren zur automatisierten Kalibrierung von Thermometern zur Kalibrierung von Thermometern verwendet.

Für die Realisierung der Erfindung ist es auch zweckmäßig, die vorbeschriebenen Ausführungsformen und Merkmale der Ansprüche zu kombinieren.

Nachfolgend soll die Erfindung anhand einiger Ausführungsbeispiele und zugehöriger Figuren eingehender erläutert werden. Die Ausführungsbeispiele sollen dabei die Erfindung beschreiben ohne diese zu beschränken.
Fig. 1 zeigt schematisch eine erfindungsgemäße Vorrichtung mit mindestens einem Temperatursensor.
Fig. 2 zeigt schematisch eine Vorrichtung mit einem ersten und einem zweiten Temperatursensor, die übereinander angeordnet sind.
Fig. 3 zeigt schematisch eine Vorrichtung mit einem ersten und einem zweiten Temperatursensor, die nebeneinander angeordnet sind.

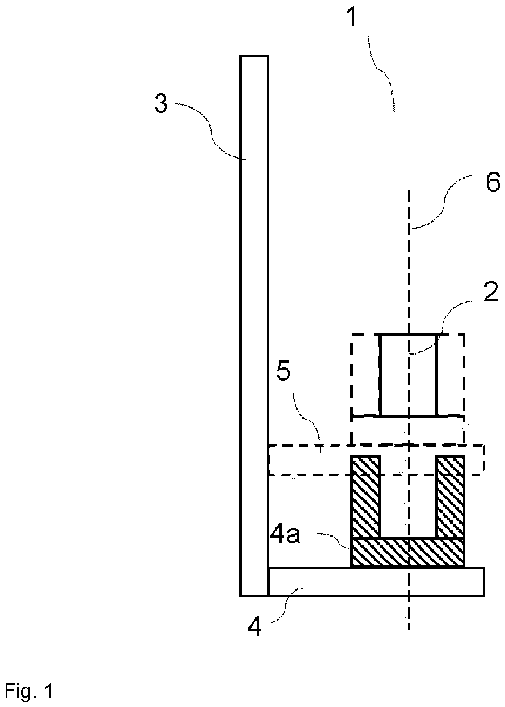

Fig. 1 zeigt eine Vorrichtung 1, umfassend mindestens einem Temperatursensor 2, eine Steuereinrichtung (nicht dargestellt in Fig. 1), eine Auswerte- und Speichereinheit (nicht dargestellt in Fig. 1), eine Positioniereinrichtung 3 und eine Kalibriereinrichtung 4. Die Kalibriereinrichtung 4 umfasst mindestens eine Fixpunktzelle 4a. Die Positioniereinrichtung 3 bewegt den mindestens einen Temperatursensor 2 und die Kalibriereinrichtung 4 entlang mindestens einer vertikalen Achse der Vorrichtung 6. Der mindestens eine Temperatursensor 2 und die mindestens eine Fixpunktzelle 4a sind auf einer vertikalen Achse 6 der Vorrichtung 1 angeordnet.

In dem Verfahren zur automatisierten Kalibrierung von Thermometern mit mindestens einem Temperatursensor unter Verwendung einer Vorrichtung 1 entsprechend Fig. 1 bewegt die Positioniereinrichtung 3 in Schritt a) die Kalibriereinrichtung 4 und den Temperatursensor 2 entlang einer vertikalen Achse 6 der Vorrichtung 1 aufeinander zu, so dass ein thermischer Kontakt zwischen dem Temperatursensor 2 und der Fixpunktzelle 4a besteht, um den Temperatursensor 2 zu kalibrieren. Während der Kalibrierung des Temperatursensors 2, d.h. im Kalibriermodus, befindet sich die Kalibriereinrichtung 4 in der Kalibrierposition 5. Dadurch ist der thermische Kontakt zwischen dem Temperatursensor 2 und der Fixpunktzelle 4a temporär hergestellt. Nach abgeschlossener Kalibrierung des Temperatursensors 2 bewegt in Schritt b) die Positioniereinrichtung 3 die Kalibriereinrichtung 4 und den Temperatursensor 2 entlang der vertikalen Achse 6 der Vorrichtung 1 voneinander weg, so dass ein thermischer Kontakt zwischen dem Temperatursensor 2 und der zu messenden Umgebung besteht, um die Umgebungstemperatur zu messen. Der Temperatursensor 2 befindet sich im Messmodus.

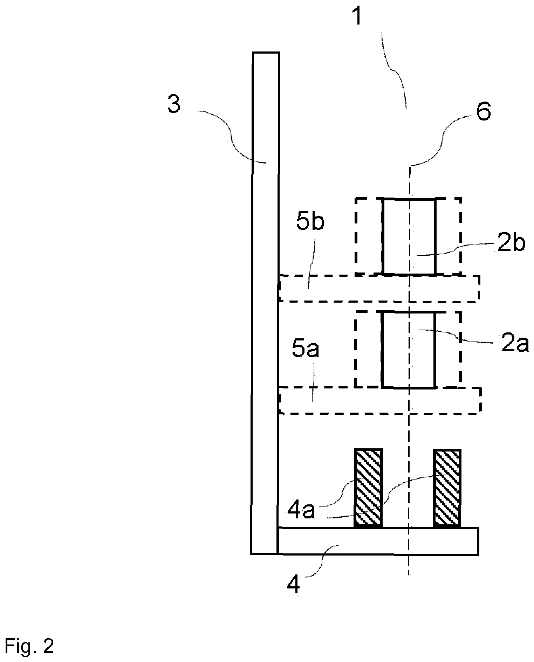

Fig. 2 zeigt eine Vorrichtung 1 mit einem ersten Temperatursensor 2a, einem zweiten Temperatursensor 2b, eine Steuereinrichtung (nicht dargestellt in Fig. 2), eine Auswerte- und Speichereinheit (nicht dargestellt in Fig. 2), einer Positioniereinrichtung 3 und einer Kalibriereinrichtung 4. Der erste Temperatursensor 2a und der zweite Temperatursensor 2b sind entlang einer vertikalen Achse 6 der Vorrichtung 1 übereinander angeordnet. Die Kalibriereinrichtung 4 umfasst eine Fixpunktzelle 4a. Der erste Temperatursensor 2a, der zweite Temperatursensor 2b und die Fixpunktzelle 4a sind auf einer vertikalen Achse 6 der Vorrichtung 1 angeordnet.

In dem Verfahren zur automatisierten Kalibrierung von Thermometern unter Verwendung einer Vorrichtung mit einem ersten und einem zweiten Temperatursensor 2a, 2b, die entlang einer vertikalen Achse 6 der Vorrichtung übereinander angeordnet sind entsprechend Fig. 2 bewegt die Positioniereinrichtung 3 in Schritt a) die Kalibriereinrichtung 4 und den ersten Temperatursensor 2a entlang der vertikalen Achse 6 der Vorrichtung 1 aufeinander zu, so dass ein thermischer Kontakt zwischen dem ersten Temperatursensor 2a und der Fixpunktzelle 4a besteht, um den Temperatursensor 2a zu kalibrieren. Gleichzeitig besteht ein thermischer Kontakt zwischen dem zweiten Temperatursensor 2b und der Umgebungstemperatur, so dass kontinuierlich die Umgebungstemperatur erfasst wird. Während der Kalibrierung des ersten Temperatursensors 2a, d.h. im Kalibriermodus, befindet sich die Kalibriereinrichtung 4 in der Kalibrierposition 5. Dadurch ist der thermische Kontakt zwischen dem ersten Temperatursensor 2a und der Fixpunktzelle 4a temporär hergestellt und gleichzeitig die weitere Erfassung der Umgebungstemperatur durch den zweiten Temperatursensor 2b ermöglicht. Wenn der erste Temperatursensor 2a im Kalibriermodus ist, so ist die gemessene Umgebungstemperatur gleich die vom zweiten Temperatursensor 2b erfasste Umgebungstemperatur. Der erste und der zweite Temperatursensor 2a, 2b sind über die Auswerte- und Speichereinheit miteinander gekoppelt, so dass der zweite Temperatursensor 2b anhand der kalibrierten Kennlinie des ersten Temperatursensors 2a geprüft wird. Nach abgeschlossener Kalibrierung der ersten Temperatursensors 2a bewegt in Schritt b) die Positioniereinrichtung 3 die Kalibriereinrichtung 4 und den ersten Temperatursensor 2a entlang der vertikalen Achse 6 der Vorrichtung 1 voneinander weg, so dass der erste Temperatursensor 2a wieder in thermischen Kontakt mit der Umgebung steht, um die Umgebungstemperatur zu messen. Der erste und der zweite Temperatursensor 2a, 2b befinden sich im Messmodus, so dass beide Sensoren die Umgebungstemperatur erfassen. Durch bekannte Auswerteverfahren wird der Mittelwert aus den vom ersten und zweiten Temperatursensor 2a, 2b erfassten Temperaturwerte gebildet.

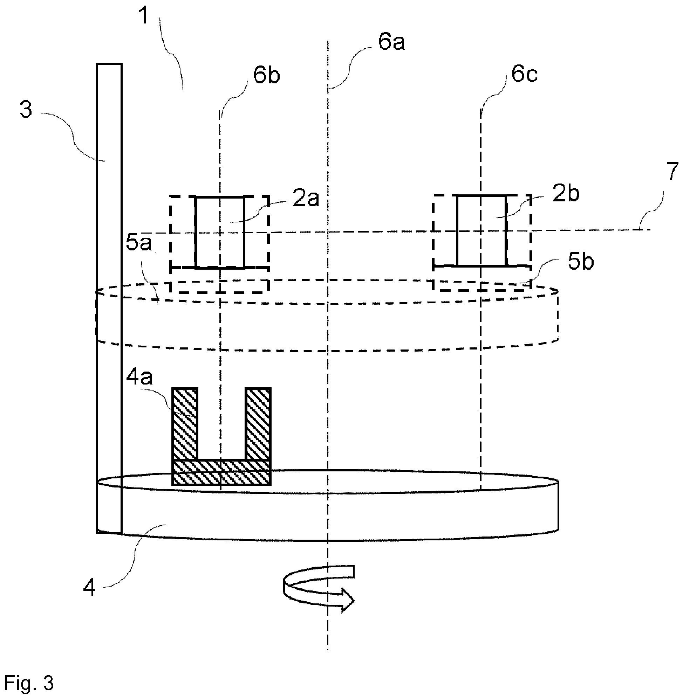

Fig. 3 zeigt eine Vorrichtung 1 mit einem ersten Temperatursensor 2a, einem zweiten Temperatursensor 2b, einer Positioniereinrichtung 3 und einer Kalibriereinrichtung 4. Der erste Temperatursensor 2a und der zweite Temperatursensor 2b sind entlang einer horizontalen Achse 7 der Vorrichtung 1 nebeneinander angeordnet. Die Kalibriereinrichtung 4 umfasst eine Fixpunktzelle 4a, die radial beabstandet von der ersten vertikalen Achse 6a der Vorrichtung 1 angeordnet ist. Die Positioniereinrichtung 3 ist derart ausgebildet, die Kalibriereinrichtung 4 um die erste vertikale Achse 6a der Vorrichtung 1 rotatorisch zu bewegen.

In dem Verfahren zur automatisierten Kalibrierung von Thermometern unter Verwendung einer Vorrichtung entsprechend Fig. 3 positioniert in Schritt c) die Positioniereinrichtung durch eine rotatorische Bewegung um die erste vertikale Achse 6a der Vorrichtung 1 die Kalibriereinrichtung 4 derart, dass der erste Temperatursensor 2a und die Fixpunktzelle 4a auf einer zweiten vertikalen Achse 6b der Vorrichtung 1 angeordnet sind.

In dem nachfolgenden Schritt a) bewegt die Positioniereinrichtung 3 die Kalibriereinrichtung 4 entlang der ersten vertikalen Achse 6a der Vorrichtung 1 auf den ersten Temperatursensor 2a zu, so dass ein thermischer Kontakt zwischen dem ersten Temperatursensor 2a und der Fixpunktzelle 4a besteht, um den ersten Temperatursensor 2a zu kalibrieren. Gleichzeitig besteht ein thermischer Kontakt zwischen dem zweiten Temperatursensor 2b und der Umgebungstemperatur, so dass kontinuierlich die Umgebungstemperatur erfasst wird. Während der Kalibrierung des ersten Temperatursensors 2a, d.h. im Kalibriermodus, befindet sich die Kalibriereinrichtung 4 in der Kalibrierposition 5a.

Nach abgeschlossener Kalibrierung des ersten Temperatursensors 2a bewegt in Schritt b) die Positioniereinrichtung 3 die Kalibriereinrichtung von dem ersten Temperatursensor 2a entlang der ersten vertikalen Achse 6a der Vorrichtung 1 voneinander weg, so dass ein thermischer Kontakt zwischen dem ersten Temperatursensor 2a und der Umgebung besteht, um die Umgebungstemperatur zu messen. Der erste und der zweite Temperatursensor 2a, 2b befinden sich im Messmodus.

Anschließend wird der Schritt c) wiederholt. Die Positioniereinrichtung 3 positioniert durch eine rotatorische Bewegung um die erste vertikale Achse 6a der Vorrichtung 1 die Kalibriereinrichtung 4 derart, dass der zweite Temperatursensor 2b und die Fixpunktzelle 4a auf einer dritten vertikalen Achse 6c der Vorrichtung 1 angeordnet sind.

Nachfolgend bewegt in Schritt a) die Positioniereinrichtung 3 die Kalibriereinrichtung 4 entlang der ersten vertikalen Achse 6a der Vorrichtung 1 auf den zweiten Temperatursensor 2b zu, so dass ein thermischer Kontakt zwischen dem zweiten Temperatursensor 2b und der Fixpunktzelle 4a besteht, um den zweiten Temperatursensor 2b zu kalibrieren. Gleichzeitig besteht ein thermischer Kontakt zwischen dem ersten Temperatursensor 2a und der Umgebungstemperatur, so dass kontinuierlich die Umgebungstemperatur erfasst wird. Während der Kalibrierung des zweiten Temperatursensors 2b, d.h. im Kalibriermodus, befindet sich die Kalibriereinrichtung 4 in der Kalibrierposition 5b.

Nach abgeschlossener Kalibrierung des zweiten Temperatursensors 2b bewegt in Schritt b) die Positioniereinrichtung 3 die Kalibriereinrichtung von dem zweiten Temperatursensor 2b entlang der ersten vertikalen Achse 6a der Vorrichtung 1 voneinander weg, so dass ein thermischer Kontakt zwischen dem zweiten Temperatursensor 2b und der Umgebung besteht, um die Umgebungstemperatur zu messen. Der erste und der zweite Temperatursensor 2a, 2b befinden sich im Messmodus.

### Bezugszeichen

- 1: Vorrichtung
- 2: Mindestens ein Temperatursensor
- 2a: Erster Temperatursensor
- 2b: Zweiter Temperatursensor
- 3: Positioniereinrichtung
- 4: Kalibriereinrichtung
- 4a: Mindestens eine Fixpunktzelle
- 4b: Erste Fixpunktzelle
- 4c: Zweite Fixpunktzelle
- 5: Kalibrierposition bei Kalibrierung des mindestens einen Temperatursensors
- 5a: Kalibrierposition bei Kalibrierung des ersten Temperatursensors
- 5b: Kalibrierposition bei Kalibrierung des zweiten Temperatursensors
- 6: Mindestens eine vertikale Achse der Vorrichtung
- 6a: Erste vertikale Achse der Vorrichtung
- 6b: Zweite vertikale Achse der Vorrichtung
- 6c: Dritte vertikale Achse der Vorrichtung
- 7: Eine horizontale Achse

## Patentansprüche

1. Vorrichtung (1) zur automatisierten Kalibrierung von Thermometern umfassend
- mindestens einen Temperatursensor (2),
- mindestens eine Steuereinrichtung,
- mindestens eine Auswerte- und Speichereinheit,
- mindestens eine Positioniereinrichtung (3) und
- mindestens eine Kalibriereinrichtung (4),
wobei die Kalibriereinrichtung (4) mindestens eine Fixpunktzelle (4a) umfasst, und
die Positioniereinrichtung (3) mindestens einen ersten Linearantrieb umfasst und derart ausgebildet ist, entweder den mindestens einen Temperatursensor (2) und die Kalibriereinrichtung (4) oder nur die Kalibriereinrichtung (4) durch den mindestens einen ersten Linearantrieb entlang mindestens einer vertikalen Achse der Vorrichtung (6) zu bewegen.

2. Vorrichtung (1) nach Anspruch 1, **dadurch gekennzeichnet, dass** die Positioniereinrichtung (3) mindestens einen zweiten Linearantrieb und/oder mindestens einen rotorischen Antrieb umfasst und derart ausgebildet ist, die Kalibriereinrichtung (4) durch den mindestens einen zweiten Linearantrieb zusätzlich entlang einer ersten horizontalen Achse (7) der Vorrichtung zu bewegen und/oder durch den mindestens einen rotorischen Antrieb um eine erste vertikale Achse der Vorrichtung (6a) zu rotieren.

3. Vorrichtung (1) nach Anspruch 1 oder 2, **dadurch gekennzeichnet, dass** auf jeder der mindestens einen vertikalen Achsen der Vorrichtung (6) mindestens ein Temperatursensor (2) angeordnet ist und die vertikalen Achsen der Vorrichtung parallel zueinander sind.

4. Vorrichtung (1) nach einem der Ansprüche 1 bis 3, **dadurch gekennzeichnet, dass** die Kalibriereinrichtung (4) derart ausgebildet ist, dass die mindestens eine Fixpunktzelle (4a) radial beabstandet von der ersten vertikalen Achse der Vorrichtung (6a) angeordnet ist.

5. Vorrichtung (1) nach einem der Ansprüche 1 bis 4, weiterhin aufweisend einen ersten und einen zweiten Temperatursensor (2a); (2b), **dadurch gekennzeichnet, dass** der erste und der zweite Temperatursensor (2a); (2b) entlang einer vertikalen Achse der Vorrichtung (6) übereinander angeordnet sind oder entlang einer zweiten horizontalen Achse (7) der Vorrichtung auf zwei parallelen vertikalen Achsen nebeneinander angeordnet sind.

6. Verwendung einer Vorrichtung (1) nach einem der Ansprüche 1 bis 5 zur automatisierten Kalibrierung von Thermometern.

7. Verfahren zur automatisierten Kalibrierung von Thermometern unter Verwendung einer Vorrichtung (1) nach Anspruch 1, wobei das Verfahren die folgenden Schritte umfasst:
a) herstellen eines thermischen Kontakts zwischen dem mindestens einen Temperatursensor (2) und der mindestens einen Fixpunktzelle (4a), um den mindestens einen Temperatursensor (2) zu kalibrieren, indem die Positioniereinrichtung (3) durch den mindestens einen ersten Linearantrieb entweder den mindestens einen Temperatursensor (2) und die Kalibriereinrichtung (4) entlang mindestens einer vertikalen Achse der Vorrichtung (6) aufeinander zubewegt oder nur die Kalibriereinrichtung (4) auf den mindestens einen Temperatursensor (2) zubewegt,
b) entfernen des thermischen Kontakts zwischen dem mindestens einen Temperatursensor (2) und der mindestens einen Fixpunktzelle (4a), indem die Positioniereinrichtung (3) durch den mindestens einen ersten Linearantrieb entweder den mindestens einen Temperatursensor (2) und die Kalibriereinrichtung (4) entlang der mindestens einen vertikalen Achse der Vorrichtung (6) voneinander wegbewegt oder nur die Kalibriereinrichtung (4) von dem mindestens einen Temperatursensor (2) wegbewegt, so dass ein thermischer Kontakt zwischen dem mindestens einen Temperatursensor (2) und der zu messenden Umgebungstemperatur besteht, um die Umgebungstemperatur zu messen.

8. Verfahren zur automatisierten Kalibrierung von Thermometern nach Anspruch 7, **dadurch gekennzeichnet, dass** vor Schritt a) in Schritt c) die Kalibriereinrichtung (4) positioniert wird, indem die Positioniereinrichtung (3) die Kalibriereinrichtung (4) derart positioniert, dass der mindestens eine Temperatursensor (2) und die mindestens eine Fixpunktzelle (4a) auf einer vertikalen Achse der Vorrichtung (6) angeordnet sind.

9. Verfahren zur automatisierten Kalibrierung von Thermometern nach Anspruch 7 oder 8, **dadurch gekennzeichnet, dass** die Kalibriereinrichtung (4) positioniert wird, indem die Positioniereinrichtung (3) mindestens einen zweiten Linearantrieb und/oder mindestens einen rotorischen Antrieb umfasst und die Kalibriereinrichtung (4) durch den mindestens einen zweiten Linearantrieb translatorisch entlang einer horizontalen Achse (7) der Vorrichtung und/oder durch den mindestens einen rotorischen Antrieb rotatorisch um die mindestens eine vertikale Achse der Vorrichtung (6) bewegt.

10. Verfahren zur automatisierten Kalibrierung von Thermometern nach einem der Ansprüche 7 bis 9 unter Verwendung einer Vorrichtung (1), weiterhin aufweisend einen ersten und einen zweiten Temperatursensor (2a); (2b), wobei der erste und der zweite Temperatursensor (2a); (2b) entlang einer vertikalen Achse der Vorrichtung (6) übereinander oder entlang einer horizontalen Achse (7) der Vorrichtung auf zwei parallelen vertikalen Achsen nebeneinander angeordnet sind, **dadurch gekennzeichnet, dass** in Schritt a) der thermische Kontakt zwischen dem ersten Temperatursensor (2a) und der mindestens einen Fixpunktzelle (4a) hergestellt wird, um den ersten Temperatursensor (2a) zu kalibrieren, und gleichzeitig der zweite Temperatursensor (2b) in thermischen Kontakt mit der zu messenden Umgebungstemperatur steht, um die Umgebungstemperatur zu messen.

11. Verfahren zur automatisierten Kalibrierung von Thermometern nach Anspruch 10, **dadurch gekennzeichnet, dass** nach Schritt b) die Schritte
c) Positionieren der Kalibriereinrichtung (4), so dass der zweite Temperatursensor (2b) und die mindestens eine Fixpunktzelle (4a) auf einer vertikalen Achse der Vorrichtung (6) angeordnet sind,
a) herstellen eines thermischen Kontakts zwischen dem zweiten Temperatursensor (2b) und der mindestens einen Fixpunktzelle (4a), um den zweiten Temperatursensor (2b) zu kalibrieren, und
b) entfernen des thermischen Kontakts zwischen dem zweiten Temperatursensor (2b) und der mindestens einen Fixpunktzelle (4a), so dass der zweite Temperatursensor (2b) in thermischen Kontakt mit der zu messenden Umgebungstemperatur steht,
wiederholt werden.

12. Verfahren zur automatisierten Kalibrierung von Thermometern nach Anspruch 10 oder 11 unter Verwendung einer Vorrichtung (1), weiterhin aufweisend eine erste und eine zweite Fixpunktzelle (4b); (4c), **gekennzeichnet dadurch, dass** die Schritte c), a), b) viermal wiederholt werden, um den ersten Temperatursensor (2a) zu positionieren und nacheinander mittels der ersten und der zweiten Fixpunktzelle (4b); (4c) zu kalibrieren, und anschließend den zweiten Temperatursensor (2b) zu positionieren und nacheinander mittels der ersten und zweiten Fixpunktzelle (4b); (4c) zu kalibrieren.

## Claims

1. Device (1) for automatically calibrating thermometers, comprising
- at least one temperature sensor (2),
- at least one control means,
- at least one evaluation and storage unit,
- at least one positioning means (3) and
- at least one calibration means (4),
wherein the calibration means (4) comprises at least one fixed-point cell (4a), and
the positioning means (3) comprises at least one first linear drive and is designed to move either the at least one temperature sensor (2) and the calibration means (4) or only the calibration means (4) along at least one vertical axis of the device (6) by means of the at least one first linear drive.

2. Device (1) according to claim 1, **characterised in that** the positioning means (3) comprises at least one second linear drive and/or at least one rotor drive and is designed to additionally move the calibration means (4) along a first horizontal axis (7) of the device by means of the at least one second linear drive and/or to rotate said calibration means about a first vertical axis of the device (6a) by means of the at least one rotor drive.

3. Device (1) according to either claim 1 or claim 2, **characterised in that** at least one temperature sensor (2) is arranged on each of the at least one vertical axes of the device (6), and the vertical axes of the device are parallel to one another.

4. Device (1) according to any of claims 1 to 3, **characterised in that** the calibration means (4) is designed such that the at least one fixed-point cell (4a) is arranged radially at a distance from the first vertical axis of the device (6a).

5. Device (1) according to any of claims 1 to 4, further comprising a first and a second temperature sensor (2a); (2b), **characterised in that** the first and the second temperature sensor (2a); (2b) are arranged above one another along a vertical axis of the device (6) or are arranged next to one another along a second horizontal axis (7) of the device on two parallel vertical axes.

6. Use of a device (1) according to any of claims 1 to 5 for automatically calibrating thermometers.

7. Method for automatically calibrating thermometers using a device (1) according to claim 1, wherein the method comprises the following steps:
a) establishing thermal contact between the at least one temperature sensor (2) and the at least one fixed-point cell (4a) in order to calibrate the at least one temperature sensor (2) by the positioning means (3), by means of the at least one first linear drive, either moving the at least one temperature sensor (2) and the calibration means (4) towards one another along at least one vertical axis of the device (6) or only moving the calibration means (4) towards the at least one temperature sensor (2),
b) removing the thermal contact between the at least one temperature sensor (2) and the at least one fixed-point cell (4a) by the positioning means (3), by means of the at least one first linear drive, either moving the at least one temperature sensor (2) and the calibration means (4) away from one another along the at least one vertical axis of the device (6) or only moving the calibration means (4) away from the at least one temperature sensor (2) so that there is thermal contact between the at least one temperature sensor (2) and the ambient temperature to be measured in order to measure the ambient temperature.

8. Method for automatically calibrating thermometers according to claim 7, **characterised in that** before step a) in step c), the calibration means (4) is positioned by the positioning means (3) positioning the calibration means (4) such that the at least one temperature sensor (2) and the at least one fixed-point cell (4a) are arranged on a vertical axis of the device (6).

9. Method for automatically calibrating thermometers according to either claim 7 or claim 8, **characterised in that** the calibration means (4) is positioned by the positioning means (3) comprising at least one second linear drive and/or at least one rotor drive, and the calibration means (4) moving translationally along a horizontal axis (7) of the device by means of the at least one second linear drive and/or about the at least one vertical axis of the device (6) by means of the at least one rotor drive.

10. Method for automatically calibrating thermometers according to any of claims 7 to 9 using a device (1), further comprising a first and a second temperature sensor (2a); (2b), the first and the second temperature sensor (2a); (2b) being arranged above one another along a vertical axis of the device (6) or next to one another along a horizontal axis (7) of the device on two parallel vertical axes, **characterised in that** in step a), the thermal contact between the first temperature sensor (2a) and the at least one fixed-point cell (4a) is established in order to calibrate the first temperature sensor (2a), and at the same time the second temperature sensor (2b) is in thermal contact with the ambient temperature to be measured in order to measure the ambient temperature.

11. Method for automatically calibrating thermometers according to claim 10, **characterised in that** after step b), the steps of
c) positioning the calibration means (4) so that the second temperature sensor (2b) and the at least one fixed-point cell (4a) are arranged on a vertical axis of the device (6),
a) establishing thermal contact between the second temperature sensor (2b) and the at least one fixed-point cell (4a) in order to calibrate the second temperature sensor (2b), and
b) removing the thermal contact between the second temperature sensor (2b) and the at least one fixed-point cell (4a) so that the second temperature sensor (2b) is in thermal contact with the ambient temperature to be measured,
are repeated.

12. Method for automatically calibrating thermometers according to either claim 10 or claim 11 using a device (1), further comprising a first and a second fixed-point cell (4b); (4c), **characterised in that** steps c), a), b) are repeated four times in order to position the first temperature sensor (2a) and successively calibrate it by means of the first and the second fixed-point cell (4b); (4c) and to then position the second temperature sensor (2b) and successively calibrate it by means of the first and the second fixed-point cell (4b); (4c).

## Revendications

1. Dispositif (1) permettant l'étalonnage automatisé de thermomètres comprenant
- au moins un capteur de température (2),
- au moins un dispositif de commande,
- au moins une unité d'évaluation et de mémorisation,
- au moins un dispositif de positionnement (3) et
- au moins un dispositif d'étalonnage (4),
le dispositif d'étalonnage (4) comprenant au moins une cellule à point fixe (4a), et
le dispositif de positionnement (3) comprenant au moins un premier entraînement linéaire et étant conçu pour déplacer soit l'au moins un capteur de température (2) et le dispositif d'étalonnage (4) soit seulement le dispositif d'étalonnage (4) le long d'au moins un axe vertical du dispositif (6) par le biais de l'au moins un premier entraînement linéaire.

2. Dispositif (1) selon la revendication 1, **caractérisé en ce que** le dispositif de positionnement (3) comprend au moins un deuxième entraînement linéaire et/ou au moins un entraînement rotatif et est conçu pour déplacer le dispositif d'étalonnage (4) en outre le long d'un premier axe horizontal (7) du dispositif par le biais de l'au moins un deuxième entraînement linéaire et/ou pour entraîner en rotation le dispositif d'étalonnage autour d'un premier axe vertical du dispositif (6a) par le biais de l'au moins un entraînement rotatif.

3. Dispositif (1) selon la revendication 1 ou 2, **caractérisé en ce qu'**au moins un capteur de température (2) est disposé sur chaque axe parmi l'au moins un axe vertical du dispositif (6) et les axes verticaux du dispositif sont parallèles les uns aux autres.

4. Dispositif (1) selon l'une des revendications 1 à 3, **caractérisé en ce que** le dispositif d'étalonnage (4) est conçu de telle sorte que l'au moins une cellule à point fixe (4a) est disposée de manière espacée radialement du premier axe vertical du dispositif (6a).

5. Dispositif (1) selon l'une des revendications 1 à 4, présentant en outre un premier et un deuxième capteur de température (2a) ; (2b), **caractérisé en ce que** le premier et le deuxième capteur de température (2a) ; (2b) sont disposés l'un au-dessus de l'autre le long d'un axe vertical du dispositif (6) ou sont disposés l'un à côté de l'autre sur deux axes verticaux parallèles le long d'un deuxième axe horizontal (7) du dispositif.

6. Utilisation d'un dispositif (1) selon l'une des revendications 1 à 5 pour l'étalonnage automatisé de thermomètres.

7. Procédé permettant l'étalonnage automatisé de thermomètres à l'aide d'un dispositif (1) selon la revendication 1, le procédé comprenant les étapes suivantes :
a) réalisation d'un contact thermique entre l'au moins un capteur de température (2) et l'au moins une cellule à point fixe (4a), afin d'étalonner l'au moins un capteur de température (2), par le fait que le dispositif de positionnement (3), par le biais de l'au moins un premier entraînement linéaire, soit déplace l'au moins un capteur de température (2) et le dispositif d'étalonnage (4) l'un vers l'autre le long d'au moins un axe vertical du dispositif (6) soit déplace seulement le dispositif d'étalonnage (4) vers l'au moins un capteur de température (2),
b) retrait du contact thermique entre l'au moins un capteur de température (2) et l'au moins une cellule à point fixe (4a), par le fait que le dispositif de positionnement (3), par le biais de l'au moins un premier entraînement linéaire, soit éloigne l'au moins un capteur de température (2) et le dispositif d'étalonnage (4) l'un de l'autre le long de l'au moins un axe vertical du dispositif (6) soit éloigne seulement le dispositif d'étalonnage (4) de l'au moins un capteur de température (2), de sorte qu'un contact thermique existe entre l'au moins un capteur de température (2) et la température ambiante à mesurer, afin de mesurer la température ambiante.

8. Procédé permettant l'étalonnage automatisé de thermomètres selon la revendication 7, **caractérisé en ce qu'**avant l'étape a) le dispositif d'étalonnage (4) est positionné à l'étape c), par le fait que le dispositif de positionnement (3) positionne le dispositif d'étalonnage (4) de telle sorte que l'au moins un capteur de température (2) et l'au moins une cellule à point fixe (4a) soient disposés sur un axe vertical du dispositif (6).

9. Procédé permettant l'étalonnage automatisé de thermomètres selon la revendication 7 ou 8, **caractérisé en ce que** le dispositif d'étalonnage (4) est positionné, par le fait que le dispositif de positionnement (3) comprend au moins un deuxième entraînement linéaire et/ou au moins un entraînement rotatif et le dispositif d'étalonnage (4) est déplacé en translation le long d'un axe horizontal (7) du dispositif par le biais de l'au moins un deuxième entraînement linéaire et/ou en rotation autour de l'au moins un axe vertical du dispositif (6) par le biais de l'au moins un entraînement rotatif.

10. Procédé permettant l'étalonnage automatisé de thermomètres selon l'une des revendications 7 à 9 à l'aide d'un dispositif (1), présentant en outre un premier et un deuxième capteur de température (2a) ; (2b), le premier et le deuxième capteur de température (2a) ; (2b) étant disposés l'un au-dessus de l'autre le long d'un axe vertical du dispositif (6) ou l'un à côté de l'autre sur deux axes verticaux parallèles le long d'un axe horizontal (7) du dispositif, **caractérisé en ce qu'à** l'étape a) le contact thermique est réalisé entre le premier capteur de température (2a) et l'au moins une cellule à point fixe (4a), afin d'étalonner le premier capteur de température (2a), et en même temps le deuxième capteur de température (2b) est en contact thermique avec la température ambiante à mesurer, afin de mesurer la température ambiante.

11. Procédé permettant l'étalonnage automatisé de thermomètres selon la revendication 10, **caractérisé en ce qu'**après l'étape b) les étapes de
c) positionnement du dispositif d'étalonnage (4) de telle sorte que le deuxième capteur de température (2b) et l'au moins une cellule à point fixe (4a) soient disposés sur un axe vertical du dispositif (6),
a) réalisation d'un contact thermique entre le deuxième capteur de température (2b) et l'au moins une cellule à point fixe (4a), afin d'étalonner le deuxième capteur de température (2b), et
b) retrait du contact thermique entre le deuxième capteur de température (2b) et l'au moins une cellule à point fixe (4a), de sorte que le deuxième capteur de température (2b) soit en contact thermique avec la température ambiante à mesurer,
sont répétées.

12. Procédé permettant l'étalonnage automatisé de thermomètres selon la revendication 10 ou 11 à l'aide d'un dispositif (1), présentant en outre une première et une deuxième cellule à point fixe (4b) ; (4c), **caractérisé en ce que** les étapes c), a), b) sont répétées plusieurs fois, afin de positionner le premier capteur de température (2a) et de l'étalonner successivement au moyen de la première et de la deuxième cellule à point fixe (4b) ; (4c), et de positionner ensuite le deuxième capteur de température (2b) et de l'étalonner successivement au moyen de la première et de la deuxième cellule à point fixe (4b) ; (4c).
